# EUROPEAN PATENT APPLICATION

(11) **EP 2 913 493 A1**
(43) Date of publication of application: **02.09.2015**
(21) Application number: 14193946.2
(22) Date of filing: 19.11.2014
(51) Int. Cl.: F01N 3/10, F01N 3/023, F01N 3/021, F01N 9/00

(54) **Emissions control in diesel engines**

(30) Priority: 21.11.2013 US 201314086010
(71) Applicant: General Electric Company, Schenectady, New York 12345 (US)
(72) Inventor: Devarakonda, Maruthi N., Waukesha, WI Wisconsin 53188 (US)
(74) Representative: Williams, Andrew Richard

(57) **Abstract**

An exhaust system (100) is configured with a diesel oxidation catalyst (120) that receives first exhaust gases from a diesel engine (110), a diesel particulate filter (130) that receives second exhaust gases from the diesel oxidation catalyst. A first sensor (161) in the exhaust system determines first exhaust gases data and transmits the first exhaust gases data to a controller (180) while a second sensor (162) determines second exhaust gases data and transmits the second exhaust gases data to the controller. The controller estimates unmeasured exhaust gases data based on the first exhaust gases data and the second exhaust gases data and determines when to initiate a regeneration cycle for the diesel particulate filter.

## Description

### TECHNICAL FIELD

The present disclosure relates to emissions controls for internal combustion engines generally and in particular to methods and systems for emissions control in diesel engines.

### BACKGROUND

Diesel engines are used in a variety of stationary and mobile applications. Diesel engines are commonly used in cars and trucks, for example. In order to comply with emissions standards, many diesel engines utilize catalysts, such as diesel oxidation catalysts (DOC). DOCs may reduce emissions of diesel engines by oxidizing hydrocarbons and carbon monoxide into carbon dioxide and water. Diesel engines may also, or instead, use one or more diesel particulate filters (DPFs) to reduce emissions by removing diesel particulate matter from the exhaust gases of the engine. Accumulated particulate matter in a DPF can be removed by a process called regeneration. Many DPFs can be actively regenerated by burning off the accumulated particulate through the use of a catalyst and/or by burning fuel in the exhaust system to heat the DPF to particulate combustion temperatures. A diesel engine may also passively regenerate a DPF by running the engine to elevate exhaust temperatures and/or produce emissions of the nitrogen oxides NO and NO₂ (collectively NOx) to oxidize the accumulated particulate matter. Regenerating too often can shorten the lifespan of a DPF and other components of an exhaust system and waste fuel, while not regenerating often enough can cause inefficient fuel usage in the engine.

### BRIEF DESCRIPTION OF THE INVENTION

In an exemplary non-limiting embodiment, a diesel engine exhaust system may be configured with a diesel oxidation catalyst that receives first exhaust gases from a diesel engine and a diesel particulate filter that receives second exhaust gases from the diesel oxidation catalyst. A first sensor may determine first exhaust gases data and transmit such data to a controller while a second sensor may determine second exhaust gases data and transmit such data to the controller. The controller may estimate unmeasured exhaust gases data based on the first exhaust gases data and the second exhaust gases data and determine when to initiate a regeneration cycle for the diesel particulate filter.

In another exemplary non-limiting embodiment, a method is disclosed for receiving first exhaust gases from a diesel engine at a diesel oxidation catalyst and receiving second exhaust gases from the diesel oxidation catalyst at a diesel particulate filter. First exhaust gases data may be determined at a first sensor and transmitted to a controller while second exhaust gases data may be determined at a second sensor and transmitted to the controller. The controller may estimate unmeasured exhaust gases data based on the first exhaust gases data and the second exhaust gases data and determine, based on the unmeasured exhaust gases data, when to initiate a regeneration cycle for the diesel particulate filter.

In another exemplary non-limiting embodiment, an engine may include a diesel internal combustion component that generates first exhaust gases. A diesel oxidation catalyst may receive the first exhaust gases from the diesel internal combustion component and a diesel particulate filter may receive second exhaust gases from the diesel oxidation catalyst. A first sensor may determine first exhaust gases data and transmit such data to a controller while a second sensor may determine second exhaust gases data and transmits such data to the controller. The controller may estimate unmeasured exhaust gases data based on the first exhaust gases data and the second exhaust gases data and determines when to initiate a regeneration cycle for the diesel particulate filter.

The foregoing summary, as well as the following detailed description, is better understood when read in conjunction with the drawings. For the purpose of illustrating the claimed subject matter, there is shown in the drawings examples that illustrate various embodiments; however, the invention is not limited to the specific systems and methods disclosed.

### BRIEF DESCRIPTION OF THE DRAWINGS

These and other features, aspects, and advantages of the present subject matter will become better understood when the following detailed description is read with reference to the accompanying drawings, wherein:
FIG. 1 is a block diagram of a non-limiting exemplary diesel engine and exhaust system.
FIG. 2 is a flowchart illustrating a method of implementing a non-limiting exemplary diesel engine and exhaust system.
FIG. 3 is an exemplary block diagram representing a general purpose computer system in which aspects of the methods and systems disclosed herein may be incorporated.

### DETAILED DESCRIPTION OF THE INVENTION

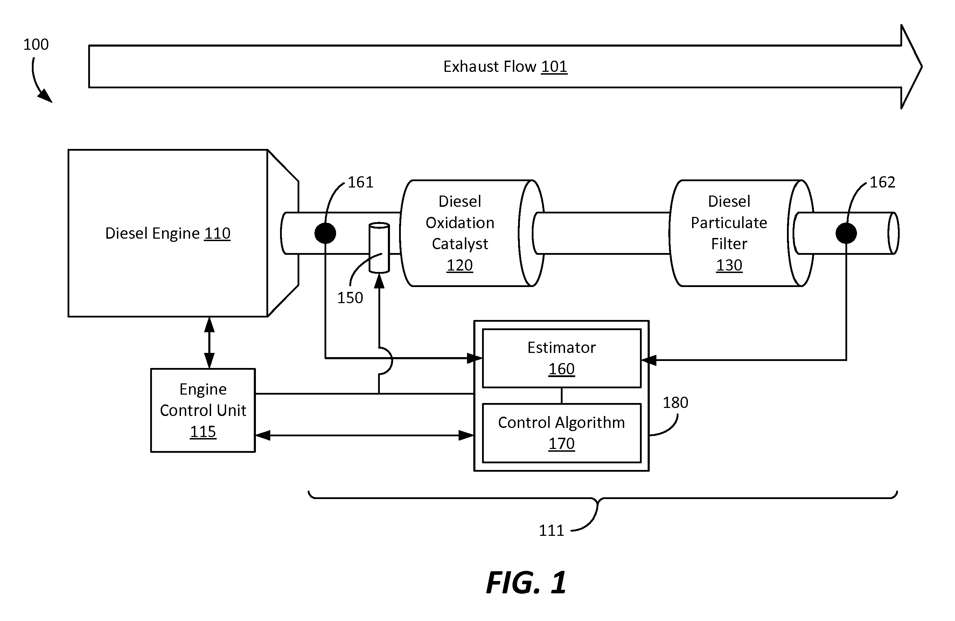

FIG. 1 illustrates exemplary system 100, including diesel engine 110 and exhaust system 111, that may be implemented according to an embodiment. Note that the entire system 100 may also be referred to as an "engine". System 100 as illustrated is a simplified block diagram that will be used to explain the concepts disclosed herein, and therefore is not to be construed as setting forth any physical requirements or particular configuration required for any embodiment disclosed herein. All components, devices, systems, and methods described herein may be implemented with number of components of any shape, form, or type, and any combination of any such components that are capable of implementing the disclosed embodiments are contemplated as within the scope of the present disclosure.

Diesel engine 110 may be any type of internal combustion engine that operates on diesel fuel or any device, component, or system that includes an internal combustion component that operates on diesel fuel and that generates exhaust gases. Exhaust system 111 may include DOC 120 and DPF 130. Diesel engine 110 may exhaust gases through exhaust system 111 in the direction indicated by exhaust flow 101, i.e., from diesel engine 110 into DOC 120 and from DOC 120 into DPF 130 until gases are ultimately exhausted from DPF 130. Each of DOC 120 and DPF 130 may convert received exhaust gases to converted exhaust gases as described herein.

Engine control unit 115 may control diesel engine 110 and any components of diesel engine 110. Engine control unit 115 may also control fuel injection component 150 (discussed in more detail herein) and/or an actuator of fuel injection component 150 in order to control the injection of fuel into exhaust system 111 for regeneration of DPF 130. Engine control unit 115 may also receive data from fuel injection component 150, which may include sensors or any other components that allow it to detect and report data, such as fuel flow rate, exhaust flow rate, exhaust gas species concentrations, temperature, and pressure data. In some embodiments, fuel injection component 150 may obtain or determine such data by communicating, or otherwise operating in conjunction, with thermocouples, delta pressure sensors, and/or other types of sensors configured in exhaust system 111. Alternatively, engine control unit 115 may obtain or determine exhaust flow rate, exhaust gas species concentrations, temperature, and pressure data for exhaust system 111 or exhaust gases directed thereto by operating directly with thermocouples, delta pressure sensors, and/or other types of sensors configured in exhaust system 111, or by using any other means that may provide or determine such data. Engine control unit 115 may determine, acquire, or otherwise obtain and may transmit or otherwise provide data such as flow rate, exhaust gas species concentrations, temperature, and pressure data for exhaust system 111 or exhaust gases directed thereto to controller 180 or components thereof (discussed in more detail below). All such embodiments are contemplated as within the scope of the present disclosure.

In an embodiment, diesel engine 110 exhausts gases into DOC 120. In this embodiment, DOC 120 may be diesel oxidation catalyst subsystem. DOC 120 may contain materials such as palladium and platinum and may oxidize hydrocarbons and carbon monoxide into carbon dioxide and water. Gases exhausted into DOC 120 by diesel engine 110 may include particulate matter that may be exhausted from DOC 120 into DPF 130.

DPF 130 may be any type of diesel particulate filter capable of being regenerated, or any combination of thereof, that may remove particles from exhausted gases exhausted from DOC 120, including a cordierite wall flow filter, a silicon carbide wall flow filter, a ceramic fiber filter, and a metal fiber flow through filter. DPF 130 may remove any portion or all of the particulate matter exhausted from DOC 120.

Byproducts of diesel fuel combustion include particulate matter, such as ash, build up in DPF 130, increasing the pressure before the filter. In order to return a DPF 130 to original or improved operating capabilities, a regeneration process or regeneration cycle may be used. Regeneration may be passive or active. In an active regeneration embodiment, fuel injection component 150 may inject diesel into exhaust system 111 that may be ignited to introduce high heat into exhaust system 111 that then burns the particulate matter to burn off the particulate matter captured in DPF 130. In some such embodiments, an additional fuel borne catalyst may be introduced with the diesel fuel injected by fuel injection component 150 to reduce the temperate needed to burn off the particulate matter. Fuel injection component 150 may be any means, component, device, or combination thereof capable of introducing fuel into the exhaust stream, and all such embodiments are contemplated as within the scope of the present disclosure. In some embodiments, a secondary post injection of fuel may be used for active regeneration, where additional fuel is injected into one or more of the cylinders of diesel engine 110 in order to increase the temperature of the exhaust gases emitted by diesel engine 110. Engine control unit 115 may issue an instruction that causes this to be performed at diesel engine 110, in some embodiment in response to input or an instruction received from controller 180.

Note that other methods of active regeneration may also be used with some embodiments, such as using a fuel burner after a turbo configured at diesel engine 110 to increase the exhaust temperature, using a catalytic oxidizer to increase the temperature of the exhaust emitted by diesel engine 110 in combination with an after injection (e.g., HC-Doser), using resistive heating coils to increase the temperature of the exhaust emitted by diesel engine 110, and/or using microwave energy to increase the particulate temperature of particulate matter in DPF 130. Any of these methods may be used in isolation or in combination with any other regeneration methods, passive or active, and all such embodiments are contemplated as within the scope of the present disclosure.

In a passive regeneration embodiment, the heat generated by diesel engine 110's exhaust may be used to burn off the particulate matter in DPF 130. In such embodiments, a catalyst may be introduced into exhaust system 111 to facilitate the burning of the particulate matter, which happens when the NOx in DPF 130 reacts with the soot captured in DPF 130. Controller 180 may determine or otherwise estimate the amount of NOx in DPF 130 and determine or estimate whether enough NOx is in or entering DPF 130 to adequately passively regenerate DPF 130 and, if so, controller 180 may not request active regeneration thereby saving fuel and improving fuel economy. If controller 180 estimates that there is not enough NOx going into DPF 130, then controller 180 may request or transmit instructions for active regeneration. Note that both passive and active regeneration may be used in some embodiments.

Exhaust system 111 may be configured with controller 180 having at least two components, estimator 160 and control algorithm 170. Note that estimator 160 and control algorithm 170 may be combined, for example, as portions of a single software module or component, or may be separately implemented in separate software and/or hardware components. Controller 180 may be any type and any number of computing devices, software modules, or any combination thereof, and may be implemented by a device dedicated to performing the functions of a controller as described herein or by a device that performs other additional functions. All such embodiments are contemplated as within the scope of the present disclosure.

NOx sensor 161 may be configured to detect and/or determine measurements of NOx from exhaust gases entering DOC 120. NOx sensor 161 may be configured to provide or otherwise transmit this data, directly or indirectly, to controller 180 and/or estimator 160. NOx sensor 162 may be configured to detect and/or determine measurements of NOx from exhaust gases exiting DPF 130. NOx sensor 162 may be configured to provide or otherwise transmit this data, directly or indirectly, to controller 180 and/or estimator 160.

Estimator 160 may receive, using any means, including wireless communications, wired communications, or any combination thereof, measurements of particular gases, species concentrations, or other measurements from various sensors that may be configured at various points in exhaust system 111, including NOx sensors 161 and 162. Estimator 160 may also receive other data, such as flow rate, temperature, species concentrations, and pressure data for exhaust system 111 or exhaust gases directed thereto, from other components of system 100, such as engine control unit 115. Estimator 160 may exercise models of exhaust systems to determine estimates of exhaust system states and gas contents that are not directly measured. For example, estimator 160 may exercise a model of a DOC and a DPF configured similar to the particular configuration of DOC 120 and DPF 130 to determine estimates NOx concentrations at points in exhaust system 111 where direct measurements are not made, such as at the point between DOC 120 and DPF 130. In another example, estimator 160 may estimate other key species (e.g., CO, NH₃ and CH₄) concentrations at various points in exhaust system 111 (e.g., before gasses enter DOC 120) based on data received from engine control unit 115 using maps and/or correlations. Estimator 160 may also, or instead, use this information to estimate particulate matter levels in DPF 130. The models used by estimator 160 may be linear or non-linear models (e.g., extended Kalman filters) that may be derived from math-based DOC and/or DPF models. All such models and any others that may be used to estimate NOx concentrations and/or particulate matter deposits are contemplated as within the scope of the present disclosure.

Estimator 160 may obtain other operating condition data, such as flow rate, temperature, and pressure data, from engine control unit 115, indirectly or directly from fuel injection component 150, and/or indirectly or directly from other components of diesel engine 110 and/or exhaust system 111, such as thermocouples and delta pressure sensors. Estimator 160 may take the measurements received from NOx sensors 161 and 162 in combination with any other operating condition data and estimate, by exercising models representing similar exhaust systems, the quantity and/or concentration of NO and NO₂ in the gases entering DPF 130. Estimator 160 may also, or instead, estimate the storage of any gases, particulate matter, and/or substances within any catalyst and/or filter, and/or estimate the quantities and/or concentrations of any other gases or any other substances that may be present anywhere in exhaust system 111, regardless of whether such gases or substances are directly measured by sensors or using any other means. All such embodiments are contemplated as within the scope of the present disclosure.

Estimator 160 may provide such estimates to control algorithm 170 that may then determine a time of initiation of an active regeneration cycle for DPF 130 and, in some embodiments, a duration of active regeneration. For example, control algorithm 170 may determine when to activate fuel injection component 150, for how long fuel injection component 150 should be activated, and/or the particular fuel/catalyst mix that should be used by fuel injection component 150. In some embodiments, control algorithm 170 that may determine a time of initiation of injection of a catalyst to assist in passive regeneration of DPF 130 and, in some embodiments, a duration of such catalyst injection. Instructions for performing injections of fuel and/or catalyst may then be transmitted or otherwise provided to engine control unit 115 for application to fuel injection component 150. Alternatively, control algorithm 170 and/or controller 180 may directly control fuel injection component 150.

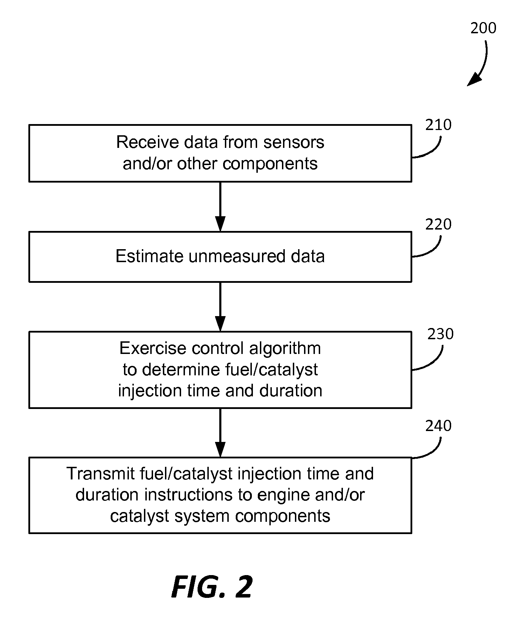

FIG. 2 illustrates exemplary, non-limiting method 200 of implementing an embodiment as disclosed herein. Method 200, and the individual actions and functions described in method 200, may be performed by any one or more devices or components, including those described herein, such as controller 180 of FIG. 1, and/or any other component or device of the systems illustrated in FIG. 1. In an embodiment, method 200 may be performed by any other devices, components, or combinations thereof, in some embodiments in conjunction with other systems, devices and/or components. Note that any of the functions and/or actions described in regard to any of the blocks of method 200 may be performed in any order, in isolation, with a subset of other functions and/or actions described in regard to any of the other blocks of method 200 or any other method described herein, and in combination with other functions and/or actions, including those described herein and those not set forth herein. All such embodiments are contemplated as within the scope of the present disclosure.

At block 210, data may be received from sensors configured in an exhaust system and/or from any other component of an engine or exhaust system. For example, at block 210, in an exhaust system having a DOC configured upstream from a DPF, a NOx sensor located upstream from the DOC (e.g., NOx sensor 161) may transmit sensor data such as NOx quantity and/or concentration. In such a system, a NOx sensor may be located downstream from the DPF and may transmit sensor data such as NOx quantity and/or concentration of the exhaust traveling past the sensor at that location in the catalyst system. Other data may also be received from other components. For example, flow rate, temperature, species concentration, and pressure data for a catalyst system or exhaust gases directed thereto may be received from an engine control unit (e.g., engine control unit 115). Such data may be received at a controller or computing device such as any of those described herein.

At block 220, estimates may be made for unmeasured data. For example, estimates of data associated with gases such as NO and NO₂ at points in a catalyst system where direct measurements are not made, such as at a point between a DOC and a DPF or where exhaust gases initially enter an exhaust system. Such data may include estimates of other key species (e.g., CO, NH₃, and CH₄) concentrations at various points in an exhaust system 111 made based on data received from an engine control unit by using maps and/or correlations.

At block 230, a control algorithm may be exercised to determine regeneration cycle initiation times and duration for a DPF in order to improve or maintain proper operating conditions for a diesel engine and/or exhaust system. The control algorithm may also, or instead, determine a fuel/catalyst mix for fuel to be used in active regeneration, or an initiation time and duration for addition of a catalyst into an exhaust system to assist with passive regeneration.

At block 240, regeneration time, duration, and fuel/catalyst mix, or instructions to perform regeneration or otherwise introduce fuel and/or catalyst to an exhaust system may be transmitted to the appropriate component. For example, where components are configured to receive settings directly, a controller that determines a regeneration time, duration, and fuel/catalyst mix may transmit these parameters to the component. Alternatively, for components that are configured to receive instructions, a controller may be configured to transmit instructions to implement regeneration using these parameters to the component.

For example, a controller may determine that a time for active regeneration has arrived and may instruct a fuel injection component configured in an exhaust system to begin injecting fuel into the exhaust system. Similarly, a controller may determine a current fuel/catalyst mix for a fuel injection component and may transmit this setting to the fuel injection component or transmit a command that will cause the fuel injection component to operate using the determined fuel/catalyst mix. Note that in some embodiments, a determination may be made that no regeneration is currently needed, and therefore no instruction or setting may be transmitted.

The technical effect of the systems and methods set forth herein is the ability to meet emissions regulations and achieve precise control of diesel engine emissions using estimation and control algorithms with a minimum number of sensors, thereby reducing the cost and complexity of a diesel engine exhaust system. As will be appreciated by those skilled in the art, the use of the disclosed processes and systems may reduce the emissions of such engines while enabling them to run longer and be more reliable, cleaner, and less expensive. Those skilled in the art will recognize that the disclosed diesel engine exhaust systems and methods may be combined with other systems and technologies in order to achieve even greater emissions control and engine performance. All such embodiments are contemplated as within the scope of the present disclosure.

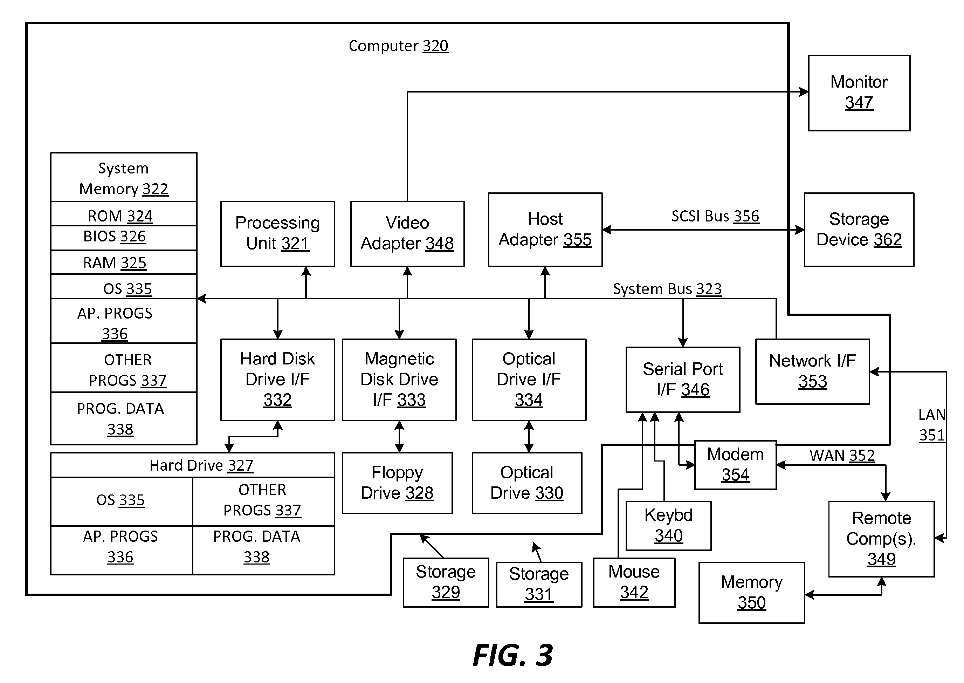

FIG. 3 and the following discussion are intended to provide a brief general description of a suitable computing environment in which the diesel engine exhaust systems and methods disclosed herein and/or portions thereof may be implemented. For example, the functions of controller 180 may be performed by one or more devices that include some or all of the aspects described in regard to FIG. 3. Some or all of the devices described in FIG. 3 that may be used to perform functions of the claimed embodiments may be configured in a controller that may be embedded into a system such as those described with regard to FIG. 1. Alternatively, some or all of the devices described in FIG. 3 may be included in any device, combination of devices, or any system that performs any aspect of a disclosed embodiment.

Although not required, the diesel engine exhaust systems and methods disclosed herein may be described in the general context of computer-executable instructions, such as program modules, being executed by a computer, such as a client workstation, server or personal computer. Such computer-executable instructions may be stored on any type of computer-readable storage device that is not a transient signal per se. Generally, program modules include routines, programs, objects, components, data structures and the like that perform particular tasks or implement particular abstract data types. Moreover, it should be appreciated that the diesel engine exhaust systems and methods disclosed herein and/or portions thereof may be practiced with other computer system configurations, including hand-held devices, multi-processor systems, microprocessor-based or programmable consumer electronics, network PCs, minicomputers, mainframe computers and the like. The methods and systems disclosed herein may also be practiced in distributed computing environments where tasks are performed by remote processing devices that are linked through a communications network. In a distributed computing environment, program modules may be located in both local and remote memory storage devices.

FIG. 3 is a block diagram representing a general purpose computer system in which aspects of the methods and systems disclosed herein and/or portions thereof may be incorporated. As shown, the exemplary general purpose computing system includes computer 320 or the like, including processing unit 321, system memory 322, and system bus 323 that couples various system components including the system memory to processing unit 321. System bus 323 may be any of several types of bus structures including a memory bus or memory controller, a peripheral bus, and a local bus using any of a variety of bus architectures. The system memory may include read-only memory (ROM) 324 and random access memory (RAM) 325. Basic input/output system 326 (BIOS), which may contain the basic routines that help to transfer information between elements within computer 320, such as during start-up, may be stored in ROM 324.

Computer 320 may further include hard disk drive 327 for reading from and writing to a hard disk (not shown), magnetic disk drive 328 for reading from or writing to removable magnetic disk 329, and/or optical disk drive 330 for reading from or writing to removable optical disk 331 such as a CD-ROM or other optical media. Hard disk drive 327, magnetic disk drive 328, and optical disk drive 330 may be connected to system bus 323 by hard disk drive interface 332, magnetic disk drive interface 333, and optical drive interface 334, respectively. The drives and their associated computer-readable media provide non-volatile storage of computer-readable instructions, data structures, program modules and other data for computer 320.

Although the exemplary environment described herein employs a hard disk, removable magnetic disk 329, and removable optical disk 331, it should be appreciated that other types of computer-readable media that can store data that is accessible by a computer may also be used in the exemplary operating environment. Such other types of media include, but are not limited to, a magnetic cassette, a flash memory card, a digital video or versatile disk, a Bernoulli cartridge, a random access memory (RAM), a read-only memory (ROM), and the like.

A number of program modules may be stored on hard disk drive 327, magnetic disk 329, optical disk 331, ROM 324, and/or RAM 325, including an operating system 335, one or more application programs 336, other program modules 337 and program data 338. A user may enter commands and information into the computer 320 through input devices such as a keyboard 340 and pointing device 342. Other input devices (not shown) may include a microphone, joystick, game pad, satellite disk, scanner, or the like. These and other input devices are often connected to the processing unit 321 through a serial port interface 346 that is coupled to the system bus, but may be connected by other interfaces, such as a parallel port, game port, or universal serial bus (USB). A monitor 347 or other type of display device may also be connected to the system bus 323 via an interface, such as a video adapter 348. In addition to the monitor 347, a computer may include other peripheral output devices (not shown), such as speakers and printers. The exemplary system of FIG. 3 may also include host adapter 355, Small Computer System Interface (SCSI) bus 356, and external storage device 362 that may be connected to the SCSI bus 356.

The computer 320 may operate in a networked environment using logical and/or physical connections to one or more remote computers or devices, such as remote computer 349, components of diesel engine 110, and fuel injection component 150. Components of diesel engine 110 and fuel injection component 150 may be any device as described herein capable of performing the described functions. Remote computer 349 may be a personal computer, a server, a router, a network PC, a peer device or other common network node, and may include many or all of the elements described above relative to the computer 320, although only a memory storage device 350 has been illustrated in FIG. 3. The logical connections depicted in FIG. 3 may include local area network (LAN) 351 and wide area network (WAN) 352. Such networking environments are commonplace in offices, enterprise-wide computer networks, intranets, and the Internet.

When used in a LAN networking environment, computer 320 may be connected to LAN 351 through network interface or adapter 353. When used in a WAN networking environment, computer 320 may include modem 354 or other means for establishing communications over wide area network 352, such as the Internet. Modem 354, which may be internal or external, may be connected to system bus 323 via serial port interface 346. In a networked environment, program modules depicted relative to computer 320, or portions thereof, may be stored in a remote memory storage device. It will be appreciated that the network connections shown are exemplary and other means of establishing a communications link between computers may be used.

Computer 320 may include a variety of computer-readable storage media. Computer-readable storage media can be any available tangible, non-transitory, or non-propagating media that can be accessed by computer 320 and includes both volatile and nonvolatile media, removable and non-removable media. By way of example, and not limitation, computer-readable media may comprise computer storage media and communication media. Computer storage media include volatile and nonvolatile, removable and non-removable media implemented in any method or technology for storage of information such as computer-readable instructions, data structures, program modules or other data. Computer storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other tangible medium which can be used to store the desired information and which can be accessed by computer 320. Combinations of any of the above should also be included within the scope of computer-readable media that may be used to store source code for implementing the methods and systems described herein. Any combination of the features or elements disclosed herein may be used in one or more embodiments.

This written description uses examples to disclose the subject matter contained herein, including the best mode, and also to enable any person skilled in the art to practice the invention, including making and using any devices or systems and performing any incorporated methods. The patentable scope of this disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system comprising:
   a diesel oxidation catalyst that receives first exhaust gases from a diesel engine;
   a diesel particulate filter that receives second exhaust gases from the diesel oxidation catalyst;
   a first sensor that determines first exhaust gases data and transmits the first exhaust gases data to a controller;
   a second sensor that determines second exhaust gases data and transmits the second exhaust gases data to the controller; and
   the controller that estimates unmeasured exhaust gases data based on the first exhaust gases data and the second exhaust gases data and determines when to initiate a regeneration cycle for the diesel particulate filter.
2. The system of clause 1, wherein the first sensor determines the first exhaust gases data based on sensing the first exhaust gases, and
   wherein the second sensor determines the second exhaust gases data based on sensing third exhaust gases exiting the diesel particulate filter.
3. The system of clause 1 or 2, wherein at least one of the first exhaust gases data and the second exhaust gases data comprises nitrogen oxide data.
4. The system of any preceding clause, wherein the controller initiates the regeneration cycle for the diesel particulate filter by transmitting an instruction to a fuel injection component.
5. The system of any preceding clause, wherein the controller initiates the regeneration cycle for the diesel particulate filter by transmitting an instruction to an engine control unit.
6. The system of any preceding clause, wherein the controller initiates the regeneration cycle for the diesel particulate filter by transmitting an instruction to perform at least one of:
   injecting fuel upstream from the diesel oxidation catalyst, or
   a secondary post injection of fuel in a cylinder of the diesel engine.
7. The system of any preceding clause, wherein the controller initiates the regeneration cycle for the diesel particulate filter by transmitting an instruction to perform at least one of:
   injecting a catalyst upstream from the diesel oxidation catalyst, or
   a secondary post injection of fuel in a cylinder of the diesel engine.
8. A method comprising:
   receiving first exhaust gases from a diesel engine at a diesel oxidation catalyst;
   receiving second exhaust gases from the diesel oxidation catalyst at a diesel particulate filter;
   determining first exhaust gases data at a first sensor;
   transmitting the first exhaust gases data from the first sensor to a controller;
   determining second exhaust gases data at a second sensor;
   transmitting the second exhaust gases data from the second sensor to the controller; and
   estimating, at the controller, unmeasured exhaust gases data based on the first exhaust gases data and the second exhaust gases data; and
   determining, at the controller based on the unmeasured exhaust gases data, when to initiate a regeneration cycle for the diesel particulate filter.
9. The method of any preceding clause, wherein determining the first exhaust gases data at the first sensor comprises determining the first exhaust gases data at the first sensor based on the first exhaust gases, and
   wherein determining the second exhaust gases data at the second sensor comprises determining the second exhaust gases data at the second sensor based on sensing third exhaust gases exiting the diesel particulate filter.
10. The method of any preceding clause, wherein at least one of the first exhaust gases data and the second exhaust gases data comprises nitrogen oxide data.
11. The method of any preceding clause, wherein determining when to initiate the regeneration cycle for the diesel particulate filter comprises transmitting an instruction to a fuel injection component.
12. The method of any preceding clause, wherein determining when to initiate the regeneration cycle for the diesel particulate filter comprises transmitting an instruction to an engine control unit.
13. The method of any preceding clause, further comprising initiating the regeneration cycle for the diesel particulate filter by transmitting an instruction to perform at least one of:
   injecting fuel upstream from the diesel oxidation catalyst, or
   a secondary post injection of fuel in a cylinder of the diesel engine.
14. The method of any preceding clause, further comprising initiating the regeneration cycle for the diesel particulate filter by transmitting an instruction to perform at least one of:
   injecting a catalyst upstream from the diesel oxidation catalyst, or
   a secondary post injection of fuel in a cylinder of the diesel engine.
15. An engine comprising:
   a diesel internal combustion component that generates first exhaust gases;
   a diesel oxidation catalyst that receives the first exhaust gases from the diesel internal combustion component;
   a diesel particulate filter that receives second exhaust gases from the diesel oxidation catalyst;
   a first sensor that determines first exhaust gases data and transmits the first exhaust gases data to a controller;
   a second sensor that determines second exhaust gases data and transmits the second exhaust gases data to the controller; and
   the controller that estimates unmeasured exhaust gases data based on the first exhaust gases data and the second exhaust gases data and determines when to initiate a regeneration cycle for the diesel particulate filter.
16. The engine of any preceding clause, wherein the first sensor determines the first exhaust gases data based on sensing the first exhaust gases, and
   wherein the second sensor determines the second exhaust gases data based on sensing third exhaust gases exiting the diesel particulate filter.
17. The engine of any preceding clause, wherein at least one of the first exhaust gases data and the second exhaust gases data comprises nitrogen oxide data.
18. The engine of any preceding clause, wherein the controller initiates the regeneration cycle for the diesel particulate filter by transmitting an instruction to a fuel injection component.
19. The engine of any preceding clause, wherein the controller initiates the regeneration cycle for the diesel particulate filter by transmitting an instruction to an engine control unit.
20. The engine of any preceding clause, wherein the controller initiates the regeneration cycle for the diesel particulate filter by transmitting an instruction to perform at least one of:
   injecting fuel upstream from the diesel oxidation catalyst, or
   a secondary post injection of fuel in a cylinder of the diesel engine.

## Claims

1. A system (100) comprising:
a diesel oxidation catalyst (120) that receives first exhaust gases from a diesel engine (110);
a diesel particulate filter (130) that receives second exhaust gases from the diesel oxidation catalyst;
a first sensor (161) that determines first exhaust gases data and transmits the first exhaust gases data to a controller (180);
a second sensor (162) that determines second exhaust gases data and transmits the second exhaust gases data to the controller (180); and
the controller (180) that estimates unmeasured exhaust gases data based on the first exhaust gases data and the second exhaust gases data and determines when to initiate a regeneration cycle for the diesel particulate filter.

2. The system (100) of claim 1, wherein the first sensor (161) determines the first exhaust gases data based on sensing the first exhaust gases, and
wherein the second sensor (162) determines the second exhaust gases data based on sensing third exhaust gases exiting the diesel particulate filter.

3. The system (100) of either of claim 1 or 2, wherein at least one of the first exhaust gases data and the second exhaust gases data comprises nitrogen oxide data.

4. The system (100) of any preceding claim, wherein the controller (180) initiates the regeneration cycle for the diesel particulate filter by transmitting an instruction to a fuel injection component.

5. The system (100) of any preceding claim, wherein the controller (180) initiates the regeneration cycle for the diesel particulate filter by transmitting an instruction to an engine control unit.

6. The system (100) of any preceding claim, wherein the controller (180) initiates the regeneration cycle for the diesel particulate filter by transmitting an instruction to perform at least one of:
injecting fuel upstream from the diesel oxidation catalyst (120), or
a secondary post injection of fuel in a cylinder of the diesel engine (110).

7. The system (100) of any preceding claim, wherein the controller (180) initiates the regeneration cycle for the diesel particulate filter by transmitting an instruction to perform at least one of:
injecting a catalyst upstream from the diesel oxidation catalyst (120), or
a secondary post injection of fuel in a cylinder of the diesel engine (110).

8. A method (200) comprising:
receiving first exhaust gases from a diesel engine (110) at a diesel oxidation catalyst (120);
receiving second exhaust gases from the diesel oxidation catalyst (120) at a diesel particulate filter (130);
determining first exhaust gases data at a first sensor (161);
transmitting the first exhaust gases data from the first sensor (161) to a controller (180);
determining second exhaust gases data at a second sensor (162);
transmitting the second exhaust gases data from the second sensor (162) to the controller (180); and
estimating, at the controller (180), unmeasured exhaust gases data based on the first exhaust gases data and the second exhaust gases data; and
determining, at the controller (180) based on the unmeasured exhaust gases data, when to initiate a regeneration cycle for the diesel particulate filter (130).

9. The method (200) of claim 8, wherein determining the first exhaust gases data at the first sensor (161) comprises determining the first exhaust gases data at the first sensor (161) based on the first exhaust gases, and
wherein determining the second exhaust gases data at the second sensor (162) comprises determining the second exhaust gases data at the second sensor (162) based on sensing third exhaust gases exiting the diesel particulate filter (130).

10. The method (200) of either of claim 8 or 9, wherein at least one of the first exhaust gases data and the second exhaust gases data comprises nitrogen oxide data.

11. The method (200) of any of claims 8 to 10, wherein determining when to initiate the regeneration cycle for the diesel particulate filter (130) comprises transmitting an instruction to a fuel injection component.

12. The method (200) of any of claims 8 to 11, wherein determining when to initiate the regeneration cycle for the diesel particulate filter (130) comprises transmitting an instruction to an engine control unit.

13. The method (200) of any of claims 8 to 12, further comprising initiating the regeneration cycle for the diesel particulate filter (130) by transmitting an instruction to perform at least one of:
injecting fuel upstream from the diesel oxidation catalyst (120), or
a secondary post injection of fuel in a cylinder of the diesel engine (110).

14. The method (200) of any of claims 8 to 13, further comprising initiating the regeneration cycle for the diesel particulate filter (130) by transmitting an instruction to perform at least one of:
injecting a catalyst upstream from the diesel oxidation catalyst (120), or
a secondary post injection of fuel in a cylinder of the diesel engine (110).

15. An engine comprising:
a diesel internal combustion component (110) that generates first exhaust gases;
a diesel oxidation catalyst (120) that receives the first exhaust gases from the diesel internal combustion component;
a diesel particulate filter (130) that receives second exhaust gases from the diesel oxidation catalyst;
a first sensor (161) that determines first exhaust gases data and transmits the first exhaust gases data to a controller (180);
a second sensor (162) that determines second exhaust gases data and transmits the second exhaust gases data to the controller (180); and
the controller (180) that estimates unmeasured exhaust gases data based on the first exhaust gases data and the second exhaust gases data and determines when to initiate a regeneration cycle for the diesel particulate filter.
